# EUROPÄISCHE PATENTSCHRIFT

(11) **EP 2 394 156 B1**
(45) Veröffentlichungstag und Bekanntmachung des Hinweises auf die Patenterteilung: **21.03.2018**
(21) Anmeldenummer: 10703245.0
(22) Anmeldetag: 26.01.2010
(51) Int. Cl.: G01N 27/403, B01L 3/00

(54) **ANORDNUNG UND VERFAHREN ZUM ELEKTROCHEMISCHEN MESSEN VON BIOCHEMISCHEN REAKTIONEN SOWIE HERSTELLUNGSVERFAHREN DER ANORDNUNG**
ARRANGEMENT AND METHOD FOR ELECTROCHEMICALLY MEASURING BIOCHEMICAL REACTIONS AND METHOD FOR PRODUCING THE ARRANGEMENT
ENSEMBLE ET PROCÉDÉ POUR LA MESURE ÉLECTROCHIMIQUE DE RÉACTIONS BIOCHIMIQUES ET PROCÉDÉ DE FABRICATION DE L'ENSEMBLE

(30) Priorität: 04.02.2009 DE 102009007387; 28.09.2009 DE 102009043228
(43) Veröffentlichungstag der Anmeldung: 14.12.2011
(73) Patentinhaber: Boehringer Ingelheim Vetmedica GmbH, 55216 Ingelheim am Rhein (DE)
(72) Erfinder: BARLAG, Heike, 90408 Nürnberg (DE)
(74) Vertreter: Von Rohr Patentanwälte Partnerschaft mbB
(86) Internationale Anmeldenummer: PCT/EP2010/050842
(87) Internationale Veröffentlichungsnummer: WO 2010/089226

(56) Entgegenhaltungen:
- EP-A- 1 591 780
- EP-A- 1 950 569
- WO-A-2005/119200
- DE-A1-102006 038 271
- DE-A1-102006 053 474
- US-A- 5 520 787
- GASPAR S ET AL: "Amperometric biosensor-based flow-through microdetector for microdialysis applications" ANALYTICA CHIMICA ACTA, ELSEVIER, AMSTERDAM, NL LNKD- DOI:10.1016/J.ACA.2004.07.041, Bd. 525, Nr. 1, 1. November 2004 (2004-11-01), Seiten 75-82, XP004594308 ISSN: 0003-2670
- JOBST G ET AL: "Mass producible miniaturized flow through a device with a biosensor array" SENSORS AND ACTUATORS B, ELSEVIER SEQUOIA S.A., LAUSANNE, CH LNKD- DOI:10.1016/S0925-4005(97)00080-4, Bd. 43, Nr. 1-3, 1. September 1997 (1997-09-01), Seiten 121-125, XP004103406 ISSN: 0925-4005

## Beschreibung

Die Erfindung bezieht sich auf eine Anordnung zum elektrochemischen Messen von biochemischen Reaktionen, insbesondere auf einen platinenbasierten Biosensor mit Flusszelle und Beschichtungshilfe. Weiterhin bezieht sich die Erfindung auf ein Herstellungsverfahren der Anordnung und auf ein Verfahren zum elektrochemischen Messen von biochemischen Reaktionen mit der angegebenen Anordnung.

Elektrochemische Biosensoren werden für eine Reihe von Anwendungen in der Biosensorik verwendet, z.B. für den Nachweis von Viren, Antikörpern oder in der DNA-Analyse. Eine Reihe von Nachweisreaktionen setzen bestimmte Temperaturverhältnisse voraus und müssen bestimmte Temperaturzyklen durchlaufen. Die elektrochemischen Biosensoren sind somit nicht nur elektrisch und fluidisch zu kontaktieren, sondern ebenfalls thermisch. Die elektrochemischen Sensoren umfassen in der Regel Metalloberflächen, welche beschichtet oder unbeschichtet vorliegen und in den zu analysierenden Lösungen stabil sein müssen. Die Sensoren sind in Array-Form auf einer Grundplatte angeordnet, um parallele Messungen durchführen zu können und für Analysen mehrerer Einzelkomponenten gleichzeitig.

Bei Verwendung eines Sensor-Arrays muss jeder Sensorspot bzw. elektrochemische Sensor mit einem anderen Erkennungsmolekül beschichtet werden. Die spezifische Beschichtung kann über lithographische Methoden oder durch Spotten erfolgen. Lithographische Methoden sind sehr teuer und aufwendig, da für jede Anwendung lithographische Masken angefertigt werden müssen und die chemischen Reaktionen zur Beschichtung eine Reihe von Schritten umfassen.

Einfacher und kostengünstiger ist das spezifische Beschichten der Sensoren durch Spotten mit Lösungen, welche die aufzubringenden Erkennungsmoleküle inklusive Bindungsgruppen enthalten. Bei Verwendung von Elektroden aus Gold können Bindungsgruppen Thiolverbindungen umfassen, welche zu einem gerichteten Binden der Erkennungsmoleküle auf den Goldoberflächen führen. Alternativ können die Elektroden aus Platin bestehen, wobei Platin in einer Reihe von Lösungen chemisch sehr stabil ist, jedoch bei elektrochemischen Messungen zu einer Potentialdrift in den verwendeten Lösungen führen kann.

Die Elektroden können mechanisch stabil auf einer Grundplatte aus Glas, Silizium oder Kunststoff angeordnet sein. Dabei werden die Metall-Elektroden mit Dünn- oder Dickfilmtechnik auf die Grundplatte aufgebracht und elektrisch über Stege kontaktiert. Im Fall von Silizium-Grundplatten kann die Mess- und Auswerteelektronik auf der Grundplatte in Form einer integrierten Schaltung enthalten sein. Silizium ist aber sehr teuer und die Herstellung von integrierten Schaltungen auf Silizium ist ebenfalls teuer und aufwendig. Alternativ kann die Grundplatte aus gedruckten Leiterplatten (PCB, printed circuit board) bestehen. Deren Herstellung ist besonders einfach und kostengünstig. Elektrische Leitungen und Kontakte sind in Form von Kupferbahnen auf der Leiterplatte ausgebildet und über einen Lack gegenüber der Umwelt elektrisch isoliert. Elektroden können durch Beschichtung des Kupfers z.B. mit Gold, bei Verwendung von Zwischenschichten, ausgebildet werden und von der Lackschicht unbedeckt sein.

Durch Spotten von Flüssigkeiten mit unterschiedlichen Erkennungsmolekülen auf verschiedenen Elektroden eines Arrays können die Elektroden für den spezifischen Nachweis unterschiedlicher Biomoleküle präpariert werden. Je Elektrode wird ein Tropfen mit einer Lösung eines bestimmten Erkennungsmoleküls gespottet und die Erkennungsmoleküle binden an die Elektrode. Das Lösungsmittel kann entfernt werden, z.B. durch Verdampfen. Beim Spotten muss jedoch verhindert werden, dass die Spotting-Lösung einer Elektrode auf der Oberfläche der Grundplatte so verläuft, dass sie mit einer zweiten Elektrode in Kontakt gelangt. Ein Verlaufen kann zu einer unbeabsichtigten Beschichtung einer benachbarten Elektrode führen, welche dann nicht spezifisch mit Erkennungsmolekülen beschichtet ist und keinen spezifischen Nachweis erlaubt. Um ein Verlaufen der Spotting-Lösung zu verhindern, können hydrophobe Beschichtungen der Grundplatte um die Elektroden herum verwendet werden. Diese Methode ist aufwendig, wenig zuverlässig und funktioniert nur, wenn wenig Lösung gespottet wird.

Alternativ können Vertiefungen geschaffen werden, in welchen die Elektroden als Grundfläche der Vertiefung eingebettet sind. Zur Schaffung der Vertiefungen können z.B. Kunststoffringe um die Elektroden herum an der Grundplatte befestigt werden oder strukturierte Folien, mit Aussparungen an den Positionen der Elektroden, auf die Grundplatte aufgebracht bzw. aufgeklebt werden. Dabei werden Erhöhungen aus der Oberflächenebene der Grundplatte gebildet, welche als Beschichtungshilfe dienen. Diese Beschichtungshilfen können jedoch, bei einer Fluidströmung über die Sensoren hinweg, zu einer Ausbildung und einem Festsetzen von Luftblasen führen, welche eine elektrochemische Messung stören können und zu falschen Messergebnissen führen.

Eine fluidische Kontaktierung der elektrochemischen Biosensoren erfolgt durch das Aufsetzen einer Flusszelle, die mechanisch mit dem Biosensor verbunden ist. Die Flusszelle weist einen Zu- und Abfluss auf. Zu untersuchende Flüssigkeiten können so durch die Flusszelle gepumpt werden, d.h. über das Sensor-Array auf der Grundplatte strömen, und bei einem spezifischen Binden von Biomolekülen an einzelnen Sensoren des Sensor-Arrays werden die Bindungen über elektrochemische Signale gemessen. Eine fluidische Kontaktierung erfolgt dabei von der Seite der Grundplatte her, auf welcher das Sensor- Array angeordnet ist. Eine thermische Kontaktierung erfolgt von der Seite der Grundplatte her, welche der Seite der Grundplatte mit dem Sensor-Array gegenüberliegt.

Das Aufsetzen einer Durchflusszelle auf die Grundplatte mit den Biosensoren und ein Abdichten mit Hilfe von Dichtringen führt häufig zu Problemen beim Handling und zu Dichtungsproblemen. Anordnungen zusammengesetzt aus Biosensoren auf einer Grundplatte und einer aufgesetzten Durchflusszelle sind in der Regel sehr kompliziert aufgebaut, mit einer Reihe von Einzelteilen, welche aufwendig zu fertigen sind. Insbesondere durch Fräsen hergestellte Mikrokavitäten in kleinen Strukturgrößen, welche häufig in Durchflusszellen verwendet werden, sind aufwendig in der Herstellung.

Die EP1591780A2 offenbart einen Sensor mit einem elektrochemischen Sensorarray. Das Sensorarray besteht aus einem Sensorelement mit Dünnfilmelektroden und metallischen Ableitflächen, wobei die Elektroden und die Ableitflächen durch eine elektrische Leitung miteinander verbunden sind. Zur Isolation der elektrischen Leitung gegen die Oberfläche des Sensorelements ist beispielsweise das Aufbringen eines isolierenden Lacks vorgesehen. Eine fluidische Ankopplung der Elektroden des Sensorelements wird über eine Abdeckung erreicht, die eine Aussparung zur Bildung eines Hohlraums aufweist, wobei die Flüssigkeitszufuhr zum Hohlraum und den Elektroden über einen Befüllungskanal in der Abdeckung erfolgt.

Aufgabe der vorliegenden Erfindung ist es, eine Anordnung und ein Verfahren zum elektrochemischen Messen von biochemischen Reaktionen mit der Anordnung anzugeben, welche Messungen ohne erhöhten Aufwand erlauben, wobei die Anordnung gegenüber Fluiden dicht herzustellen ist sowie zuverlässig spezifische Untersuchungen ermöglicht, mit einer thermischen Steuerung von der Rückseite der Anordnung her. Insbesondere ist es Aufgabe der vorliegenden Erfindung ein einfaches Handling zu gewährleisten, eine einfache und billige Fertigung der Anordnung zu ermöglichen mit möglichst wenig Teilen, und trotzdem einen dichten, funktionsfähigen Biosensor bereitzustellen.

Eine weitere Aufgabe der vorliegenden Erfindung ist es ein Herstellungsverfahren der Anordnung anzugeben, welches ein Verlaufen von Flüssigkeiten beim Beschichten der Elektroden verhindert und beim Einsatz der Anordnung eine laminare Strömung, durch ebene Oberflächen ohne hohe Erhöhungen auf der Oberfläche der Anordnung, gewährleistet.

Die angegebene Aufgabe wird bezüglich der Anordnung zum elektrochemischen Messen von biochemischen Reaktionen durch die Merkmale des Anspruchs 1, bezüglich des Verfahrens zum Messen mit der Anordnung durch die Merkmale des Anspruchs 7 und bezüglich des Herstellungsverfahrens der Anordnung durch die Merkmale des Anspruchs 8 gelöst.

Vorteilhafte Ausgestaltungen der erfindungsgemäßen Anordnung zum elektrochemischen Messen von biochemischen Reaktionen gehen aus den jeweils zugeordneten abhängigen Unteransprüchen hervor.

Die erfindungsgemäße Anordnung zum elektrochemischen Messen von biochemischen Reaktionen umfasst eine Grundplatte, ein Sensor-Array mit wenigstens zwei Sensoren, welche auf einer ersten Oberfläche der Grundplatte ausgebildet sind und für den Nachweis der biochemischen Reaktionen aktive Oberflächen aufweisen. Weiterhin umfasst die Anordnung eine Beschichtung der ersten Oberfläche der Grundplatte, eine Dichtfolie mit wenigstens einer Aussparung, durch welche in mechanischer Verbindung mit der Grundplatte und/oder der Beschichtung der Grundplatte eine Durchflusszelle über dem Sensor-Array ausgebildet ist, und wenigstens einen Zu- und einen Abfluss der Durchflusszelle, welche in Form von durchgehenden Ausnehmungen in der Grundplatte ausgebildet sind. Die aktiven Oberflächen der Sensoren sind zumindest teilweise oder vollständig frei von der Beschichtung und Bereiche der Grundplatte benachbart zu den Sensoren sind von der Beschichtung bedeckt. Durch die Verwendung einer Dichtfolie statt eines Dichtringes, wie es im Stand der Technik erfolgt, wird ein einfacher Aufbau und ein einfaches Handling beim Zusammenbau der Anordnung ermöglicht. Ein Verrutschen eines Dichtringes wird verhindert und so eine zuverlässigere Dichtung der Durchflusszelle ermöglicht.

Die Durchflusszelle über dem Sensor-Array kann durch die Grundplatte und/oder die Beschichtung der Grundplatte sowie durch die Dichtfolie in Verbindung mit einer Deckplatte, welche auf der Dichtfolie gegenüberliegend der ersten Oberfläche der Grundplatte angeordnet ist, ausgebildet sein. Über die Deckplatte kann eine Kraft auf die Dichtfolie ausgeübt werden, welche zum Komprimieren der Folie führt. Eine besonders gute Dichtung der Durchflusszelle wird dadurch erreicht.

Die aktiven Oberflächen der Sensoren und die Beschichtung der Grundplatte weisen einen Abstand voneinander auf so dass Gräben um die Sensoren ausgebildet sind.

Die Gräben bilden eine Beschichtungshilfe, welche beim Spotten der spezifischen Erkennungsmoleküle dafür sorgt, dass die gespottete Flüssigkeit eines Spots nicht über mehrere Elektroden gleichzeitig verläuft. Die Gräben fixieren einen gespotteten Tropfen an seinen Rändern und "halten" ihn über der bespotteten Elektrode. Durch Kapillarkräfte wird Flüssigkeit des Tropfens in den Graben gesogen und die Oberflächenspannung des Tropfens verhindert ein weiteres Verlaufen über der Oberfläche außerhalb des Bereichs der bespotteten Elektrode. Das Lösungsmittel des Tropfens kann verdampfen und die Erkennungsmoleküle binden an die Elektrode.

Der Abstand der aktiven Oberflächen der Sensoren von der Beschichtung der Grundplatte kann einen Wert im Bereich von Millimetern oder Mikrometern aufweisen, insbesondere einen Wert im Bereich von 50 µm. Die Elektroden können in Form von Interdigital-Elektroden mit fingerförmigen Stegen ausgebildet sein, wobei die Breite eines Steges im Bereich von 100 µm liegen kann und der Gesamtelektrodendurchmesser einer Elektrode im Bereich von 500 µm liegen kann.

Die Gräben um die Sensoren können vollständig durchgehend bis zur Grundplatte ausgebildet sein und eine Breite und eine Tiefe mit einem Wert im Bereich von Millimetern oder Mikrometern aufweisen, insbesondere einen Wert für die Tiefe im Bereich von 40 µm und einen Wert für die Breite im Bereich von 50 µm. In diesem Größenbereich wirken in den Gräben Kapillarkräfte, welche einen Tropen fixieren können.

Die aktive Oberfläche der Sensoren kann mit wenigstens einer Oberfläche der Beschichtung im Wesentlichen in einer gemeinsamen Ebene ausgebildet sein. Bei einem Strömen von Flüssigkeit über die Oberfläche der Grundplatte mit dem Sensor-Array bzw. der Oberfläche der Beschichtung und Sensoren ergibt eine flache, im Wesentlichen in einer gemeinsamen Ebene ausgebildete Oberfläche laminare Strömungen. Diese verbessern die Messgenauigkeit der Sensoren und verhindern bzw. vermindern Blasenbildung und Fixierung von Blasen über den Sensoren auf der Oberfläche.

Die Dichtfolie kann eine selbstklebende Folie sein, insbesondere eine selbstklebende Folie mit einer zweiseitigen Beschichtung der Folie mit einer Klebeschicht. Dies ermöglicht eine besonders einfache Fixierung der Folie auf der Grundplatte und verhindert ein Verrutschen der Dichtfolie beim Zusammenbau der Durchflusszelle.

Das erfindungsgemäße Verfahren zum elektrochemischen Messen von biochemischen Reaktionen mit der zuvor beschriebenen Anordnung umfasst die Schritte, dass die Dichtfolie mit einer Deckplatte beaufschlagt in eine Halterung eingebracht wird, welche die Dichtfolie so komprimiert, dass eine Dichtung der Durchflusszelle zwischen Deckplatte und Grundplatte ausgebildet wird. Nadelförmige Zu- und Abflüsse der Halterung können in den Ausnehmungen der Grundplatte platziert werden.

Durch die Kompression der Dichtfolie wird eine zuverlässige Dichtung der Durchflusszelle erreicht. Durch Platzieren der Zu- und Abflüsse durch die Grundplatte hindurch ist die Vorderseite der Grundplatte für die Deckplatte vollständig zugänglich. Eine genaue Justierung der Deckplatte kann entfallen, da die Zu- und Abflüsse nicht stören können. Die gesamte Vorderseite kann mit der Deckplatte bedeckt sein und somit die gesamte Dichtfolie komprimiert werden.

Das erfindungsgemäße Herstellungsverfahren der zuvor beschriebenen Anordnung umfasst, dass aktive Oberflächen der Sensoren mit Flüssigkeit so beaufschlagt werden, dass die Beschichtung der ersten Oberfläche der Grundplatte im Wesentlichen nicht benetzt wird. Die aktive Oberfläche der Sensoren umfasst die Moleküle zum Binden und/oder zum Nachweis von Biomolekülen. Die Moleküle zum Binden und/oder zum Nachweis von Biomolekülen können auf den aktiven Oberflächen der Sensoren binden. Dadurch dass die Beschichtung nicht benetzt wird, kann kein Verlaufen der Flüssigkeit über mehrere Sensoren erfolgen und eine spezifische Funktionalisierung einzelner Sensoren wird sichergestellt.

Für das erfindungsgemäße Verfahren zum elektrochemischen Messen von biochemischen Reaktionen und für das erfinderische Herstellungsverfahren der Anordnung zum elektrochemischen Messen von biochemischen Reaktionen ergeben sich die vorstehend erwähnten, mit der erfindungsgemäßen Anordnung zum elektrochemischen Messen von biochemischen Reaktionen verbundenen Vorteile.

Bevorzugte Ausführungsformen der Erfindung mit vorteilhaften Weiterbildungen gemäß den Merkmalen der abhängigen Ansprüche werden nachfolgend anhand der folgenden Figuren näher erläutert, ohne jedoch darauf beschränkt zu sein.

Es zeigen:
- Fig. 1: eine Schnittdarstellung der erfindungsgemäßen Anordnung zum elektrochemischen Messen von biochemischen Reaktionen mit Grundplatte und Dichtfolie, und
- Fig. 2: eine Aufsicht der in Fig. 1 gezeigten Anordnung mit Elektroden und Anschlüssen, und
- Fig. 3: eine vergrößerte Ansicht einer Schnittdarstellung des Sensor-Arrays nach einem ersten Ausführungsbeispiel mit Gräben, und
- Fig. 4: eine Aufsicht des Sensor-Arrays des in Fig. 3 gezeigten ersten Ausführungsbeispiels.

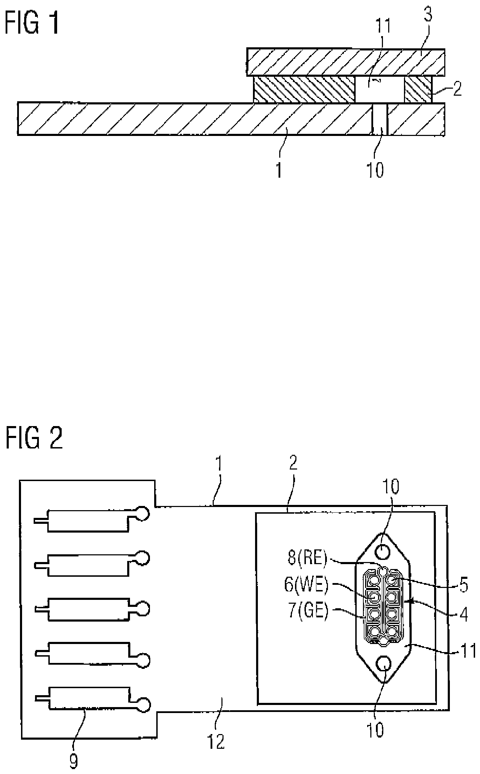

In Fig. 1 ist eine Schnittdarstellung der erfindungsgemäßen Anordnung mit einer Grundplatte 1 und einer Dichtfolie 2 gezeigt. Eine Deckplatte 3 kann auf der Dichtfolie 2 angeordnet sein, womit sich eine Durchflusszelle bildet. In Fig. 2 ist eine Aufsicht auf die in Fig. 1 gezeigte Anordnung dargestellt, wobei zur besseren Übersicht die Deckplatte 3 nicht gezeigt ist. Auf der Grundplatte 1 ist ein Sensor-Array 4 ausgebildet, welches aktive Oberflächen von Sensoren 5 in regelmäßigen Abständen, in Array-Form angeordnet umfasst. Mittig zwischen den Arbeitselektroden WE 6 ist eine Referenzelektrode RE 8 stegförmig ausgebildet. Eine Gegenelektrode GE 7 umfasst das Array von Arbeitselektroden 6 räumlich, wobei die Gegenelektrode 7 aus zwei zueinander weisenden Kammstrukturen besteht. Die sich ergebende drei Elektrodenanordnungen zum elektrochemischen Messen ergeben durch die Entkopplung von Stromfluss und Spannungsmessung besonders zuverlässige Messergebnisse. Die Elektroden 6, 7, 8 sind jeweils über nicht gezeigte elektrische Verbindungen auf der Grundplatte 1 mit elektrischen Anschlüssen 9 verbunden, über welche die

Messsignale von einer externen Ausleseeinheit abgegriffen werden können. Die nicht gezeigten elektrischen Verbindungen sind von einem Schutzlack 12 überdeckt, welcher die Verbindungen elektrisch isoliert gegenüber Flüssigkeit, welche das Sensor-Array 4 überströmen kann.

Die Grundplatte 1 ist in Form einer Leiterplatte (Printed Circuit Board) ausgeführt. In der Regel besteht die Grundplatte aus PVC oder einem Verbundfaserstoff, und die elektrischen Verbindungen und elektrischen Anschlüsse 9 sind aus einer Kupferschicht z.B. durch Ätzen von zweidimensionalen Strukturen hergestellt. Die Elektroden 6, 7, 8 sind ebenfalls aus der Kupferschicht erzeugt und zusätzlich mit z.B. Gold beschichtet. Die Referenzelektrode 8 kann auch durch Auftragen einer Ag/AgCl-Paste erzeugt sein. Zur besseren Haftung sind in der Regel zwischen der Kupferschicht und der z.B. Gold-Schicht oder Ag/AgCl-Paste, Haftschichten z.B. aus Nickel angeordnet.

Jeweils räumlich vom Sensor-Array 4 beabstandet sind zwei durchgehende Bohrungen in der Grundplatte 1 ausgebildet. Die Bohrungen dienen als Zu- und Abfluss 10. Das Sensor-Array 4 ist mittig auf der Oberfläche der Grundplatte 1 zwischen den Bohrungen angeordnet.

Eine Dichtfolie 2 ist auf der Seite des Sensor-Arrays 4 und der elektrischen Anschlüsse 9 auf der Grundplatte 1 angeordnet. Sie kann aufgelegt sein, oder als selbstklebende Folie auf die Oberfläche der Grundplatte 1 flächig geklebt sein. Eine Aussparung 11 in der Dichtfolie 2 umfasst die Zu- und Abflüsse 10 und das Sensor-Array 4 in der Aufsicht in Fig. 2. Somit sind die Zu- und Abflüsse 10 sowie das Sensor-Array 4 nicht von der Dichtfolie 2 bedeckt.

Wie in Fig. 1 gezeigt, kann eine Deckplatte 3 auf die Dichtfolie 2 aufgebracht sein, wobei eine als zweiseitiges Klebeband ausgebildete Dichtfolie 2 ein Aufkleben der Deckplatte 3 erlaubt. Es sind alternativ oder zusätzlich auch Befestigungen der Deckplatte 3 auf der Dichtfolie 2 z.B. über Klemmeinrichtungen möglich. Die Aussparung 11 in der Dichtfolie 2 bildet in Verbindung mit den Zu- und Abflüssen 10 eine Durchflusszelle, welche durch die Grundplatte 1 mit Sensor-Array 4 und durch die Dichtfolie 2 sowie Deckplatte 3 begrenzt wird. Bei Ausübung einer Kraft auf die Dichtfolie 2 über die Deckplatte 3, z.B. durch eine Klemmeinrichtung, kann die Dichtfolie 2 leicht komprimiert werden und eine fluiddichte Durchflusszelle erzeugt werden. Fluid, wie z.B. die zu analysierende Flüssigkeit mit den zu untersuchenden Biomolekülen, kann über die Zu- und Abflüsse 10 zu- und abgeführt werden und über das Sensor-Array 4 strömen. Eine elektrochemische Detektion der Biomoleküle wird so über die aktiven Oberflächen der Sensoren 5, welche mit spezifischen Erkennungsmolekülen bzw. Fängermolekülen beschichtet sein können, möglich und Messsignale können über die elektrischen Anschlüsse 9 von einer nicht gezeigten, externen Mess- und Auswerteeinheit abgegriffen und ausgewertet werden.

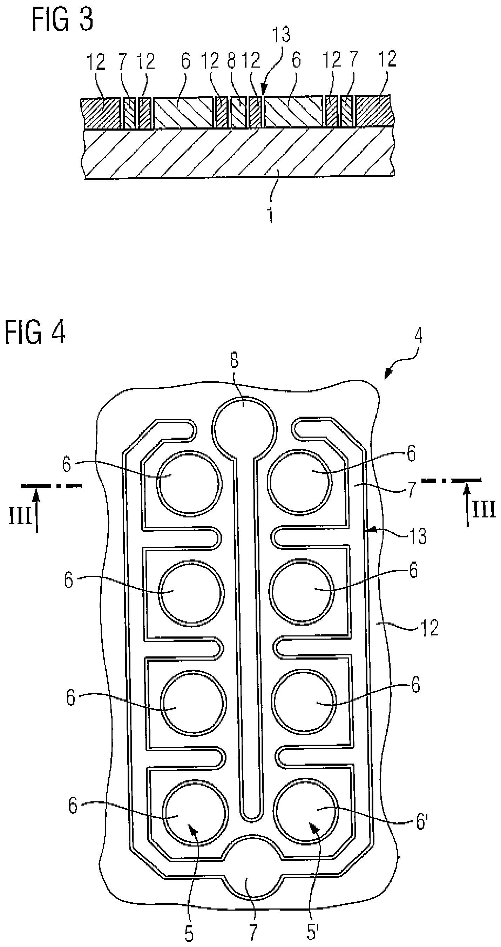

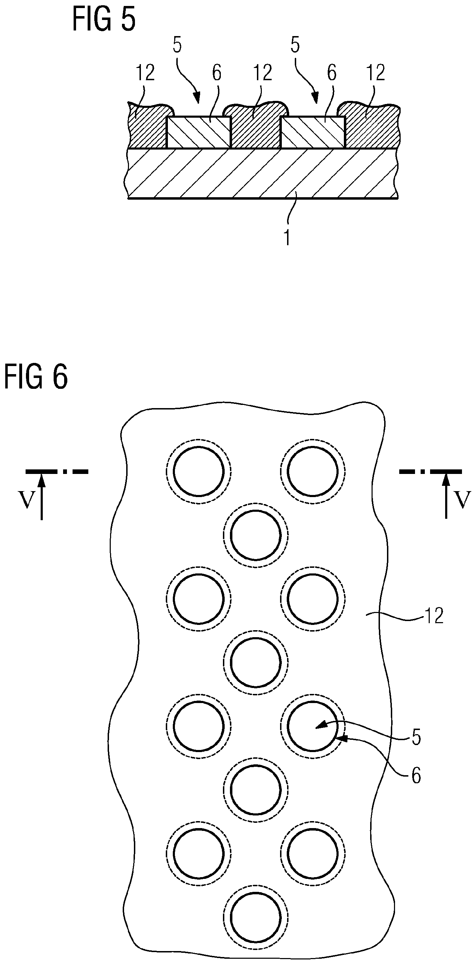

In den Fig. 3 und 4 ist ein erstes Ausführungsbeispiel der erfindungsgemäßen Anordnung mit Gräben 13 in einer Lackschicht 12 der Grundplatte 1 gezeigt. Fig. 3 zeigt eine Schnittdarstellung entlang einer Schnittlinie 14 durch die Grundplatte 1 im Bereich des Sensor-Arrays 4. Fig. 4 zeigt eine Aufsicht auf das auf der Grundplatte 1 angeordnete Sensor-Array 4. Das Sensor-Array 4 besteht aus acht, insbesondere kreisrunden Arbeitselektroden 6, welche in zwei parallelen Reihen zu je vier Arbeitselektroden 6 angeordnet sind. Mittig zwischen den zwei Reihen ist eine fingerförmige Referenzelektrode 8 parallel zu den Reihen angeordnet. Das Sensor-Array 4 wird in der Zeichenebene räumlich von einer Gegenelektrode 7 umschlossen. Die Gegenelektrode 7 ist aus zwei kammförmigen Strukturen aufgebaut, welche sich mit ihren Kammfingern gegenüberliegen. Auf einer Seite sind die beiden kammförmigen Strukturen kontaktmäßig verbunden.

Wie in Fig. 3 dargestellt ist, sind die aktiven Oberflächen 5 der Elektroden 6, 7, 8 als z.B. Goldschicht auf der Grundplatte 1 angeordnet. Der Einfachheit halber sind die elektrischen Verbindungen zwischen den Elektroden 6, 7, 8 und den elektrischen Anschlüssen 9, welcher auf der Grundplatte 1 angeordnet sind, nicht dargestellt. Bereiche der Grundplatte 1, welche nicht von aktiven Oberflächen 5 der Elektroden 6, 7, 8 und von elektrischen Anschlüssen 9 bedeckt sind, sind mit einem Lack 12 überzogen. Der Lack 12 ist als Beschichtung auf der Grundplatte 1 direkt oder indirekt, d.h. auf den elektrischen Verbindungen aufgebracht.

Zwischen den aktiven Oberflächen 5 der Elektroden 6, 7, 8 und der Lackschicht 12 sind Gräben 13 ausgebildet. Dies bedeutet, die Lackschicht 12 und die aktiven Oberflächen 5 der Elektroden 6, 7, 8 sind räumlich voneinander beabstandet. Die Gräben 13 weisen typischerweise eine Breite im Bereich von 50 µm und eine Tiefe im Bereich von 40 µm auf. Bei einer Beschichtung der aktiven Oberflächen 5, z.B. durch Spotten von in Lösung befindlichen spezifischen Fängermolekülen, dienen die Gräben 13 als Beschichtungshilfe. Die Flüssigkeit eines Tropfens Lösung auf einer aktiven Oberfläche 5 wird durch Kapillarkräfte in die Gräben 13 gezogen und durch die Oberflächenspannung über eine aktive Oberfläche 5 fixiert. Ein Verlaufen eines Tropfens auf einer ersten aktiven Oberfläche 5 eines Sensors 6 über eine zweite aktive Oberfläche 5' eines benachbarten Sensors 6'wird dadurch verhindert. Damit ist ein spezifisches Beschichten von Sensoren 6, 6' mit unterschiedlichen Fängermolekülen bzw. Erkennungsmolekülen möglich. Das Lösungsmittel kann verdampfen und es entstehen spezifisch beschichtete Sensoren 6, 6' bzw. Arbeitselektroden des Sensor-Arrays 4.

Die Gräben 13 können durchgängig bis zur Grundplatte 1 ausgebildet sein. In der Regel sind aber zumindest die elektrischen Verbindungen zwischen den Elektroden 6, 7, 8 und den elektrischen Anschlüssen 9 vollständig mit Lack 12 bedeckt. Dabei kann am Boden eines Grabens 13 eine sehr dünne Lackschicht vorhanden sein, insbesondere mit einer Dicke im Bereich nur wenigen Mikrometern, welche wesentlich dünner ausgebildet ist als die Lackschicht 12 auf der Grundplatte 1 außerhalb der Gräben 13.

Die erfindungsgemäße Anordnung zum elektrochemischen Messen von biochemischen Reaktionen kann nach einem Standardprozess zur Herstellung von gedruckten Leiterplatten gefertigt werden. Das Substrat der Grundplatte 1 ist ein Kunststoff, welcher flexibel oder starr ist, und z.B. aus Epoxydharzglashartgewebe besteht. Das Sensor-Array 4 wird zunächst in Form
von Kupferleiterbahnen realisiert, die dann galvanisch mit Gold beschichtet werden, so dass diese für elektrochemische Messungen geeignet sind. Zur Realisierung von Vertiefungen über oder um die Sensoren 6, 7, 8 als Beschichtungshilfe, wie sie z.B. durch Gräben 13 gegeben sind, wird ein Lötstopplack aufgebracht und strukturiert. Als Material kann z.B. 2-Komponentenepoxydharzlack verwendet werden, wie er bei Leiterplatten üblich ist. Da die Grundplatte 1 aus einem Kunststoff besteht, können mit Standardmethoden Löcher in die Platine gebohrt werden, welche als Zu- und Abfluss 10 für eine Durchflusszelle dienen können. Die zwei Löcher werden nun so angeordnet, dass sie auf entgegengesetzten Seiten des Sensor-Arrays 4 angeordnet sind.

Eine Dichtfolie 2, bestehend z.B. aus einer Silikonmatte oder einem Doppelklebeband, wird so geformt, dass innerhalb der Dichtfolie 2 der Raum über den Elektroden 6, 7, 8 und den Löchern 10 frei bleibt. Dann wird darüber eine Deckplatte 3 gelegt, die nicht notwendigerweise strukturiert sein muss. Als Deckplatte 3 kann ein einfaches Kunststoffplättchen dienen. Diese einfache Schichtanordnung aus Leiterplatte 1, Dichtfolie 2 und Deckplatte 3 wird nun in eine Halterung gebracht, die unterhalb der Grundplatte 1 Nadeln platziert, so dass diese genau in den Löchern 10 enden. Wird eine Silikonmatte als Dichtfolie 2 verwendet, muss die Halterung die Schichtanordnung mechanisch zusammendrücken, damit eine fluidische Dichtigkeit gewährleistet ist.

2-Komponentenepoxydharzlack ist für viele Anwendungen hinreichend biokompatibel. Durch die besondere Ausführung, bei der der Fotolack 12 nicht auf die Elektroden 6, 7, 8 reicht oder diese nur im Randbereich z.B. flach bedeckt, wird eine Beschichtungshilfe erzeugt, die im späteren Gebrauch eine besonders robuste Fluidik ermöglicht. So wird die Bildung und das Fixieren von Gasblasen über den aktiven Oberflächen der Sensoren 5 verhindert. Durch die Bohrungen 10 in der Leiterplatte bzw. Grundplatte 1 wird eine besonders einfache Realisierung einer Durchflusszelle möglich. Einfache Hohlnadeln in der Halteapparatur in Verbindung mit der Grundplatte 1, der Dichtfolie 2 und der Deckplatte 3 bilden die Durchflusszelle.

## Patentansprüche

1. Anordnung zum elektrochemischen Messen von biochemischen Reaktionen mit
- einer Grundplatte (1),
- einem Sensor-Array (4) mit wenigstens zwei Sensoren (6), welche auf einer ersten Oberfläche der Grundplatte (1) aus gebildet sind und für den Nachweis der biochemischen Reaktionen aktive Oberflächen (5) aufweisen,
- einer Beschichtung (12) der ersten Oberfläche der Grundplatte (1), wobei zumindest teilweise oder vollständig die aktiven Oberflächen der Sensoren (5) frei von der Beschichtung (12) sind und Bereiche der Grundplatte (1) benachbart zu den Sensoren (6) von der Beschichtung (12) bedeckt sind,
- einer Dichtfolie (2) mit wenigstens einer Aussparung (11), durch welche in mechanischer Verbindung mit der Grundplatte und/oder der Beschichtung (12) der Grundplatte (1) eine Durchflusszelle über dem Sensor-Array (4) ausgebildet ist, und mit
- wenigstens einem Zu- und einem Abfluss (10) der Durchflusszelle,
**dadurch gekenntzeichnet,**
dass der Zu- und der Abfluss (10) in Form von durchgehenden Ausnehmungen in der Grundplatte (1) ausgebildet sind, und
dass die aktiven Oberflächen der Sensoren (5) und die Beschichtung (12) der Grundplatte (1) einen Abstand voneinander aufweisen, so dass Gräben (13) um die Sensoren (6) ausgebildet sind.

2. Anordnung nach Anspruch 1, **dadurch gekennzeichnet, dass** die Durchflusszelle über dem Sensor-Array (4) durch die Grundplatte (1) und/oder die Beschichtung (12) der Grundplatte (1) und durch die Dichtfolie (2) in Verbindung mit einer Deckplatte (3), welche auf der Dichtfolie (2) gegenüberliegend der ersten Oberfläche der Grundplatte (1) angeordnet ist, ausgebildet ist.

3. Anordnung nach Anspruch 1 oder 2, **dadurch gekennzeichnet, dass** der Abstand der aktiven Oberflächen der Sensoren (5) von der Beschichtung (12) der Grundplatte (1) einen Wert im Bereich von Millimetern oder Mikrometern aufweist, insbesondere einen Wert im Bereich von 50 µm.

4. Anordnung nach einem der Ansprüche 1 oder 3, **dadurch gekennzeichnet, dass** die Gräben (13) um die Sensoren (6) vollständig durchgehend bis zur Grundplatte (1) ausgebildet sind und eine Tiefe mit einem Wert im Bereich von Millimetern oder Mikrometern aufweisen, insbesondere einen Wert im Bereich von 40 µm.

5. Anordnung nach einem der vorhergehenden Ansprüche, **dadurch gekennzeichnet, dass** aktive Oberflächen der Sensoren (5) mit wenigstens einer Oberfläche der Beschichtung (12) im Wesentlichen in einer gemeinsamen Ebene ausgebildet sind.

6. Anordnung nach einem der vorhergehenden Ansprüche, **dadurch gekennzeichnet, dass** die Dichtfolie (2) eine selbstklebende Folie ist, insbesondere eine selbstklebende Folie mit einer zweiseitigen Beschichtung (12) der Folie mit einer Klebeschicht.

7. Verfahren zum elektrochemischen Messen von biochemischen Reaktionen mit einer Anordnung nach einem der vorhergehenden Ansprüche, **dadurch gekennzeichnet, dass** die Anordnung mit einer Deckplatte (3) beaufschlagt in eine Halterung eingebracht wird, welche die Dichtfolie (2) so komprimiert, dass eine Dichtung der Durchflusszelle zwischen Deckplatte (3) und Grundplatte (1) ausgebildet wird, und/oder dass nadelförmige Zu- und Abflüsse der Halterung in den Ausnehmungen der Grundplatte (1) platziert werden.

8. Herstellungsverfahren einer Anordnung nach einem der Ansprüche 1 bis 6, **dadurch gekennzeichnet, dass** aktive Oberflächen der Sensoren (5) mit Flüssigkeit, welche Moleküle zum Binden und/oder Nachweis von Biomolekülen umfasst, so beaufschlagt werden, dass die Beschichtung (12) der ersten Oberfläche der Grundplatte (1) im Wesentlichen nicht benetzt wird, und die Moleküle zum Binden und/oder Nachweis von Biomolekülen auf den aktiven Oberflächen der Sensoren (5) binden.

## Claims

1. An arrangement for electrochemically measuring biochemical reactions, with:
- a base plate (1),
- a sensor array (4) with at least two sensors (6) which are formed on a first surface of the base plate (1) and comprise active surfaces (5) for detecting the biochemical reactions,
- a coating (12) of the first surface of the base plate (1), wherein the active surfaces of the sensors (5) are at least partially or fully free from the coating (12) and regions of the base plate (1) neighbouring the sensors (6) are covered by the coating (12),
- a sealing film (2) comprising at least one opening (11), through which a flow cell is formed above the sensor array (4), in mechanical connection with the base plate and/or the coating (12) of the base plate (1), and with
- at least one inflow and outflow (10) of the flow cell,
**characterised in**
**that** the inflow and the outflow (10) are formed as through-openings in the base plate (1), and
**that** the active surfaces of the sensors (5) and the coating (12) of the base plate (1) have a separation from each other, such that trenches (13) are formed around the sensors (6).

2. Arrangement according to claim 1, **characterised in that** the flow cell is formed in connection with a cover plate (3), above the sensor array (4) through the base plate (1) and/or the coating (12) of the base plate (1) and through the sealing film (2), which cover plate is arranged on the sealing film (2) opposite the first surface of the base plate (1).

3. Arrangement according to claim 1 or 2, **characterised in that** the separation of the active surfaces of the sensors (5) from the coating (12) of the base plate (1) has a value in the region of millimetres or micrometres, in particular a value in the region of 50 µm.

4. Arrangement according to one of claims 1 or 3, **characterised in that** the trenches (13) are formed around the sensors (6), fully open to the base plate (1), and have a depth with a value in the region of millimetres or micrometres, in particular a value in the region of 40 µm.

5. Arrangement according to any one of the preceding claims, **characterised in that** the active surfaces of the sensors (5) are formed substantially in a same plane as at least one surface of the coating (12).

6. Arrangement according to any one of the preceding claims, **characterised in that** the sealing film (2) is a self-adhesive film, in particular a self-adhesive film comprising a two-sided coating (12) of the film with an adhesive layer.

7. Method for electrochemically measuring biochemical reactions, comprising an arrangement according to any one of the preceding claims, **characterised in that** the arrangement, with a cover plate (3) applied, is introduced into a holder, which compresses the sealing film (2) such that a seal of the flow cell is formed between cover plate (3) and base plate (1), and/or such that needle-shaped inflows and outflows of the holder are positioned in the opening of the base plate (1).

8. Method for producing an arrangement according to one of claims 1 to 6, **characterised in that** the active surfaces of the sensors (5) are covered with liquid, which comprises molecules for binding and/or detecting biomolecules, such that the coating (12) of the first surface of the base plate (1) is substantially not wetted, and the molecules for binding and/or detecting biomolecules bind on the active surfaces of the sensors (5).

## Revendications

1. Système de mesure électrochimique de réactions biochimiques comprenant
- une plaque de base (1),
- un ensemble (4) de capteurs comprenant au moins deux capteurs (6) qui sont disposés sur une première surface de la plaque de base (1) et présentent des surfaces actives (5) pour la détection des réactions biochimiques,
- un revêtement (12) de la première surface de la plaque de base (1), au moins une partie ou l'ensemble des surfaces actives des capteurs (5) étant exempte du revêtement (12) et des zones de la plaque de base (1) adjacentes aux capteurs (6) étant recouvertes par le revêtement (12),
- une feuille étanche (2) comportant au moins un évidement (11) par lequel en liaison mécanique avec la plaque de base et/ou le revêtement (12) de la plaque de base (1) une cuve à circulation est formée sur l'ensemble (4) de capteurs, et comprenant
- au moins une entrée et une sortie (10) de la cuve à circulation,
**caractérisé en ce**
**que** l'entrée et la sortie (10) sont conçues sous la forme d'évidements continus dans la plaque de base (1) et
**que** les surfaces actives des capteurs (5) et le revêtement (12) de la plaque de base (1) présentent un espace entre eux si bien que des interstices (13) se forment autour des capteurs (6).

2. Système selon la revendication 1, **caractérisé en ce que** la cuve à circulation est conçue au-dessus de l'ensemble (4) de capteurs par la plaque de base (1) et/ou le revêtement (12) de la plaque de base (1) et par la feuille étanche (2) en liaison avec une plaque de recouvrement (3) qui est disposée sur la feuille étanche (2) en regard de la première surface de la plaque de base (1).

3. Système selon la revendication 1 ou 2, **caractérisé en ce que** l'espace entre les surfaces actives des capteurs (5) et le revêtement (12) de la plaque de base (1) présente une valeur située dans la plaque des millimètres ou des micromètres, en particulier une valeur située dans la plaque de 50 µm.

4. Système selon l'une des revendications 1 ou 3, **caractérisé en ce que** les interstices (13) autour des capteurs (6) sont entièrement continus jusqu'à la plaque de base (1) et présentent une profondeur ayant une valeur située dans la plaque des millimètres ou des micromètres, en particulier une valeur située dans la plaque de 40 µm.

5. Système selon l'une des revendications précédentes, **caractérisé en ce que** les surfaces actives des capteurs (5) ayant au moins une surface du revêtement (12) sont disposées sensiblement dans un plan commun.

6. Système selon l'une des revendications précédentes, **caractérisé en ce que** la feuille étanche (2) est une feuille autoadhésive, en particulier une feuille autoadhésive ayant un revêtement double face (12) de la feuille avec une couche adhésive.

7. Procédé de mesure électrochimique de réactions biochimiques au moyen d'un système selon l'une des revendications précédentes, **caractérisé en ce que** le système est soumis à l'action d'une plaque de recouvrement (3) dans un élément de retenue, qui comprime la feuille étanche (2) de sorte qu'un joint d'étanchéité de la cuve à circulation se forme entre la plaque de recouvrement (3) et la plaque de base (1), et/ou **en ce que** des entrées et des sorties en forme d'aiguille de l'élément de retenue sont placées dans les évidements de la plaque de base (1).

8. Procédé de fabrication d'un système selon l'une des revendications 1 à 6, **caractérisé en ce que** les surfaces actives des capteurs (5) sont soumises à l'action d'un fluide qui comprend des molécules destinées à relier et/ou à détecter des biomolécules, de sorte que le revêtement (12) de la première surface de la plaque de base (1) ne soit pas sensiblement mouillé et les molécules destinées à relier et/ou à détecter lient des biomolécules sur les surfaces actives des capteurs (5).
